# EUROPEAN PATENT APPLICATION

(11) **EP 2 060 167 A2**
(43) Date of publication of application: **20.05.2009**
(21) Application number: 08169045.5
(22) Date of filing: 13.11.2008
(51) Int. Cl.: A01G 25/09

(54) **A water irrigator**

(30) Priority: 14.11.2007 IT RE20070119
(71) Applicant: Irrimec S.r.l., 20129 Milano (IT)
(72) Inventor: Turion, Jean Claude, 20129, Milano (IT)
(74) Representative: Corradini, Corrado

(57) **Abstract**

An irrigator, comprising: a dispensing head (2) to which activating means (5) are associated which activating means (5) cause the dispensing head (2) to rotate about a substantially vertical rotation axis (A) thereof; a command organ (6) for the activating means (5), which command organ (6) is mounted on board the dispensing head (2) such as to rotate solidly with the head (2) about the rotation axis (A), and which is mobile on the dispensing head (2) between at least a first operating position, in which it commands the activating means (5) to rotate the dispensing head (2) in a direction, and a second operating position, in which it commands the activating means (5) to rotate the dispensing head (2) in an opposite direction, and endrun stop means (7), fixed with respect to the dispensing head (2), which endrun stop means (7) provide at least two stop surfaces (71, 72) which contactingly receive the command organ (6) at two distinct points of a circular trajectory (T) described thereby following rotation of the dispensing head (2), such as to displace the command organ (6) respectively from the first operating position into the second operating position and vice versa, in order to invert the rotation direction of the dispensing head (2), and first means for moving (8) which displace the endrun stop means (7) in a translation direction (X) which is perpendicular to the rotation axis (A) of the dispensing head (2), such as to change the points of the circular trajectory (T) of the command organ (6) which are intercepted by the at least two stop surfaces (71, 72).

## Description

The invention relates to an irrigator, i.e. a device which is connected to a supply conduit of a liquid, typically water, in order to spray the liquid over a terrain to be watered.

In particular, the invention relates to a high-flow irrigator with a long spraying reach, of the type commonly used in agriculture for spraying terrains of medium and large dimensions.

The irrigator of the invention schematically comprises a dispensing head destined to generate a unidirectional jet of the liquid to be dispensed, which is mounted on rotary support means which enables it to rotated about a vertical axis, such as to vary the orientation of the jet and thus wet a greater area of the terrain.

The dispensing head normally comprises a water lance sprayer which thrusts the liquid to the outside at high velocity, which sprayer is inclined with respect to the ground, and is in communication with the supply conduit of the liquid through the already-mentioned rotary support means, which are internally hollow in order to define a liquid passage towards the lance sprayer.

The rotation of the dispensing head about the vertical axis is performed by activating means, such as for example the well-known oscillating arm systems which exploit the kinetic energy of the dispensed jet.

The activating means are commonly associated to a command organ, typically a lever, which is mounted on board the dispensing head, such as to rotate solidly therewith about a first operating position, and is mobile on the dispensing head itself between at least a first position, in which it commands the activating means to rotate the dispensing head in a direction, and a second operating position, in which it commands the activating means to rotate the dispensing head in the opposite direction.

The command organ is displaced between the first and the second operating positions by endrun stops which are mounted fixed with respect to the dispensing head, and which make available at least two stop surfaces which intercept distinct points in the circular trajectory which the command organ performs solidly with the dispensing head, such as to delimit an arc within which it is free to move.

As it contacts the endrun stop, the command organ is automatically displaced from the first to the second operating position, inverting the rotation direction of the dispensing head each time.

In this way, the dispensing head is forced to oscillate about its vertical rotation axis, covering a constant angle of oscillation, such that the jet dispensed by it goes to wet a portion of terrain which is substantially in the form of a circular segment, which in the following description we shall term a "sweep", for the sake of simplicity, and the radius of which is equal to the reach of the jet and the angular breadth of which is equal to the angle of oscillation of the dispensing head.

At present the regulation of the angle of oscillation is done before the dispensing head begins to function, by manually displacing the endrun stops and blocking them time by time in different positions, according to needs.

An important requirement of these irrigators is therefore that of providing an automatic regulation of the angle of oscillation of the dispensing head, which does not require a manual intervention on the part of the operators and which intervention can be made during the irrigation, without having to halt functioning of the dispensing head.

In particular, this need is very much felt in irrigation systems in which the above-described irrigators are installed on board self-propelling structures, which move on a terrain during dispensing of the jet, such as to displace the sweep and to wet a greater area of terrain.

The self-propelling structures are commonly able to make quite simple movements, usually straight and/or rotating about a vertical axis, such that the irrigators mounted on them are able to wet portions of terrain having a regular perimeter. In the example, by displacing the sweep in a straight direction it is possible to wet a rectangular-shaped portion of land while by rotating the sweep about a vertical axis it is possible to wet a circular-crown-shaped portion.

In these cases, an automatic regulation of the angle of oscillation of the dispensing head enables modification of the sweep during the displacement of the self-propelling structure, such as to wet portions of terrain having complex perimeters, for example in order to follow the borders of a field or in order to avoid certain obstacles which are not to be wetted.

The aim of the present invention is thus to solve the above-mentioned need in known irrigators, with a solution that is simple, rational and relatively inexpensive.

The aim is attained by the characteristics of the invention as reported in claim
1. The dependent claims delineate preferred and/or particularly advantageous aspects of the invention.

In particular, an irrigator is provided comprising:
a dispensing head to which activating means are associated which cause the head to rotate about a substantially vertical rotation axis;
a command organ for the activating means, which organ is mounted on board the dispensing head such as to rotate solidly with the head about the rotation axis, and which is mobile on the dispensing head between at least a first operating position, in which it commands the activating means to rotate the dispensing head in a direction, and a second operating position, in which it command the activating means to rotate the dispensing head in an opposite direction, and
endrun stop means fixed with respect to the dispensing head, which make available at least two stop surfaces which contactingly receive the command organs at two distinct points of the circular trajectory described thereby following rotation of the dispensing head, such as to displace the command organ respectively from the first operating position to the second operating position and vice versa, to invert the rotation direction of the dispensing head.

According to the invention, the irrigator further comprises first means for moving which displace the first endrun stop means in a translation direction which is perpendicular to the rotation axis of the dispensing head, such as to change the points of the circular trajectory of the command organ which are intercepted by the stop surfaces.

Thanks to this solution, it is effectively possible to change the width of the angle of oscillation of the dispensing head by means of a simple transversal displacement of the endrun means, which displacement is done totally automatically by the first means for moving, and can for this reason be performed even when the dispensing head is already functioning.

In a preferred aspect of the invention, the irrigator further comprises means for moving, which cause the endrun means and the first means for moving to rotate together about the rotation axis of the dispensing head, such that for each rotation of the endrun means there corresponds an equal rotation of the translation direction defined by the first means for moving.

Thanks to this solution, the rotation of the endrun means enables the width of the angle of oscillation of the dispensing head to be kept constant, and to modify the orientation thereof with respect to the terrain.

Just like the preceding transversal displacement, this rotation too is actuated totally automatically by the second means for moving, and can thus also be done when the dispensing head is already functioning.

In a preferred embodiment of the invention the stop surfaces made available by the endrun means are specular with respect to a plane of symmetry containing the rotation axis of the dispensing head, and parallel to the translation direction of the endrun means.

In this way, the transversal displacement of the endrun means in the translation direction enables a regulation of the width of the angle of oscillation of the dispensing head, keeping the orientation thereof with respect to the ground unchanged.

In this way the function of the first means for moving is separated from the function of the second means for moving, in that the first means enable only a change in the width of the angle of oscillation, while the second means enable a change only in the orientation thereof with respect to the terrain.

Thanks to this solution, it is possible to make a more precise and accurate regulation of the angle of oscillation of the dispensing head.

The functioning of the first and second means for moving is preferably managed automatically by an electronic command unit.

Finally the invention provides an irrigation system comprising a self-propelling structure which moves over a terrain, on board which there is mounted at least an irrigator of the above-delineated type.

In this way, the combination of the effects due to the movement of the self-propelling structure and the regulation of the angle of oscillation of the irrigator enables the irrigation system to wet terrains having complex perimeters and/or to water around obstacles located on the terrain.

In a preferred aspect of the irrigation system, the electronic command unit of the irrigator is connected with sensor means destined to detect a position of the self-propelling structure on the terrain, and is programmable such as to automatically command the first and second means for moving the irrigator, according to the position of the self-propelling structure on the terrain, detected by the sensor means.

Thanks to this solution, it is possible to set the shape and dimensions of the terrain to be wet in the command unit, after which the irrigation system can work entirely autonomously, without any intervention on the part of an operator.

Further characteristics and advantages of the invention will better emerge from a reading of the description that follows, provided by way of non-limiting example, with the aid of the figures illustrated in the accompanying tables of drawings.

Figure 1 is a lateral view of an irrigator of the invention, partially sectioned in a vertical plane.

Figure 2 is a plan view of the irrigator of figure 1.

Figure 3 is an enlarged detail of figure 1.

Figure 4 is an orthogonal projection of the detail of figure 3.

Figure 5 is a section made along line V-V of figure 3.

Figure 6 is a section made along line VI-VI of figure 3.

Figure 7 is a section made along line VII-VII of figure 3.

Figure 8 is figure 5 shown with the shaped plate 70 displaced into a second position along the translation line X.

Figure 9 is figure 5 shown with the shaped plate 70 displaced into a third position along the translation line X.

Figure 10 is figure 9 shown with the shaped plate 70 rotated about the rotation axis A.

Figure 11 is a first irrigation system comprising the irrigator of figure 1.

Figure 12 is the irrigation system of figure 11 in a view from above, during four moments of its operation.

Figure 13 is a second irrigation system comprising the irrigator of figure 1, in a view from above and at three moments of its operation.

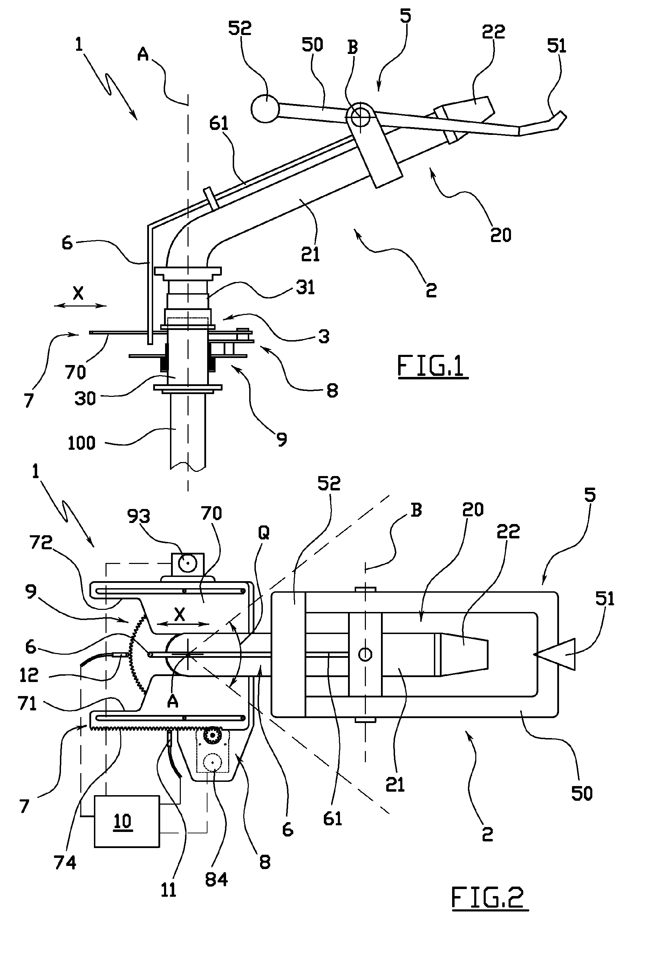

Figure 1 illustrates an irrigator 1 which can be connected to a supply conduit 100 of a liquid, typically water, in order to spread the liquid over a terrain to be watered.

The irrigator 1 schematically comprises a dispensing head 2 which generates a single-direction jet of the liquid to be dispensed, which is mounted on the rotatable support means 3 which enable the head 2 to rotate about a substantially vertical axis A, such as to vary the orientation of the jet. The dispensing head 2 comprises a lance 20 inclined in an upwards direction with respect to the rotation axis A, internally of which the liquid to be dispensed is accelerated and thrust at a high pressure in an externalwise direction.

In the illustrated example, the lance 20 comprises a rigid tube 21, preferably made of metal and being cylindrical, a lower end of which is in communication with the supply conduit 100, while the upper end is provided with an outlet nozzle 22, through which the jet of liquid exits to the outside.

The rotatable support means 3 comprise two vertically-orientated coaxial tubes , of which one is a lower tube 30 which is destined to be fixed to a structure resting on the ground, and another is an upper tube 31, which is fixed to the dispensing head 2 and is rotatably inserted on the lower tube 30 such as to be able to rotate about the common central axis A.

The lower tube 30 is in communication with the supply conduit 100 of the liquid, while the upper tube 31 is in communication with the lance 20, such as to realise a connection for the passage of the liquid towards the outlet.

The rotation of the dispensing head 2 about the vertical axis A is performed by special activating means which are denoted in their entirety by 5.

In the illustrated example, the activating means 5 comprise an oscillating frame 50 which is hinged to the lance 20 at an intermediate point thereof, according to a hinge axis B which is perpendicular to the rotation axis A of the dispensing head 2. A flow deviator 51 is mounted at the distal end of the oscillating frame 50, which deviator 51 is struck by the jet of liquid dispensed by the lance 20, while a counter-weight is mounted at the opposite end. The deviator 51 is substantially wedge-shaped, such that when it is struck by the jet it receives both a vertical thrust which tends to rotate the oscillating frame 50 in an opposite direction to the action of the weight 62, and a tangential thrust which engages the whole dispensing head 2 and rotates it about the vertical axis A. In effect, thanks to the vertical thrust exerted by the jet and the action of the counter-weight 52, the frame 50 performs repeated oscillations about the hinge axis B, each time receiving an impulsive tangential thrust which produces a rotation by steps of the dispensing head 2. In particular, the oscillating frame 50 can assume a first work configuration on the dispensing head 2, in which the deviator 51 receives a tangential thrust from the jet directed in a direction, and a second work position, in which the deviator 51 receives a tangential thrust from the jet directed in an opposite direction, such as to invert the rotation direction of the dispensing head 2.

The displacement of the oscillating frame 50 between the first and the second work configurations is performed by a mechanism which is in itself known and is therefore not illustrated in detail.

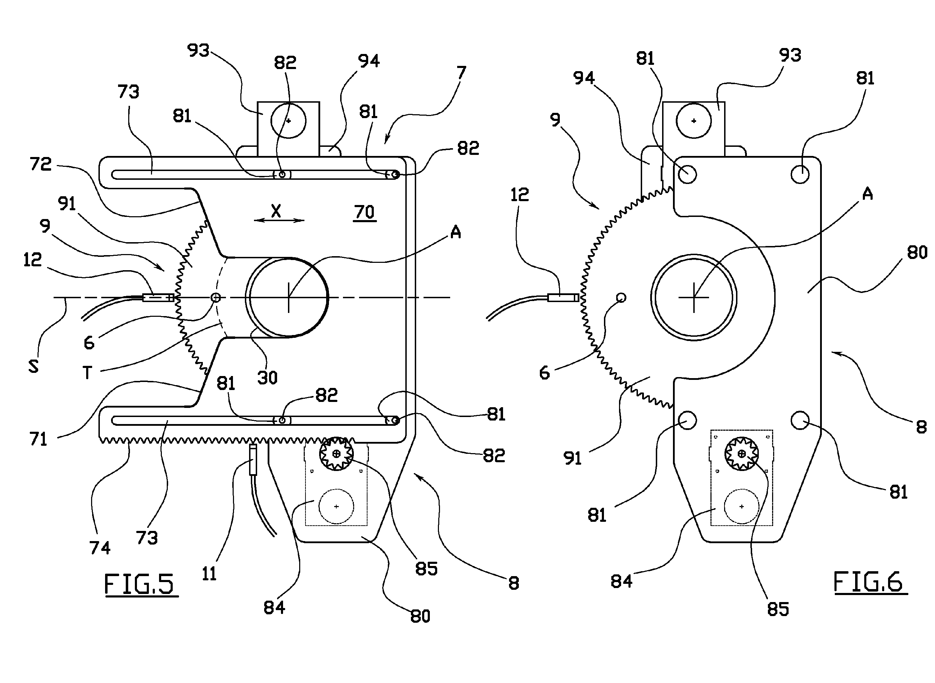

An important aspect however is that the mechanism is activated by a special command organ 6, which is mounted on board the dispensing head 2 and is thus solidly constrained in rotation there-with, describing a circular trajectory T about the vertical rotation axis A (figure 5).

The command organ 6 is mobile on board the dispensing head 2 between a first operating position, in which is forces the oscillating head 50 into the first work configuration, and a second operating position, in which it forces the oscillating head 50 into the second work configuration, such as to cause the dispensing head 2 to rotate in opposite directions.

In the illustrated example, the command organ 6 is a substantially vertically-developing lever, which is located at an end of a straight rod 61 which is oriented parallel to the lance 20 and is connected to the activating means 5. The straight rod 61 is joined to the rigid tube 21 of the lance 20 by means which enable it to rotate about the axis thereof, such that the command lever 6 displaces between the above-mentioned first and second operating positions, performing an oscillating movement with respect to the direction of the rod 61.

The displacement of the command lever 6 between the first and the second operating positions is obtained using special endrun means, denoted in their entirety by 7, which are mounted in a fixed position with respect to the dispensing head 2.

The endrun means 7 comprise a shaped plate 70, having an overall forked conformation, which lies in a perpendicular plane to the rotation axis A and is located at a higher than the lower end of the command lever 6.

As illustrated in figure 5, the shaped plate 70 embraces the lower support tube 30 and makes available two stop surfaces 71 and 72 (denoted in a bold line) which intercept the circular trajectory T of the command lever 6 at two distinct points, such as to delimit the arc of circumference in which the command lever 6 is free to move.

As it contacts the stop surfaces 71 and 72, the command lever 6 is constrained to rotate about the axis of the straight rod 61, displacing respectively from the first to the second operating position and vice versa, such as to invert the rotation direction of the dispensing head 2 each time.

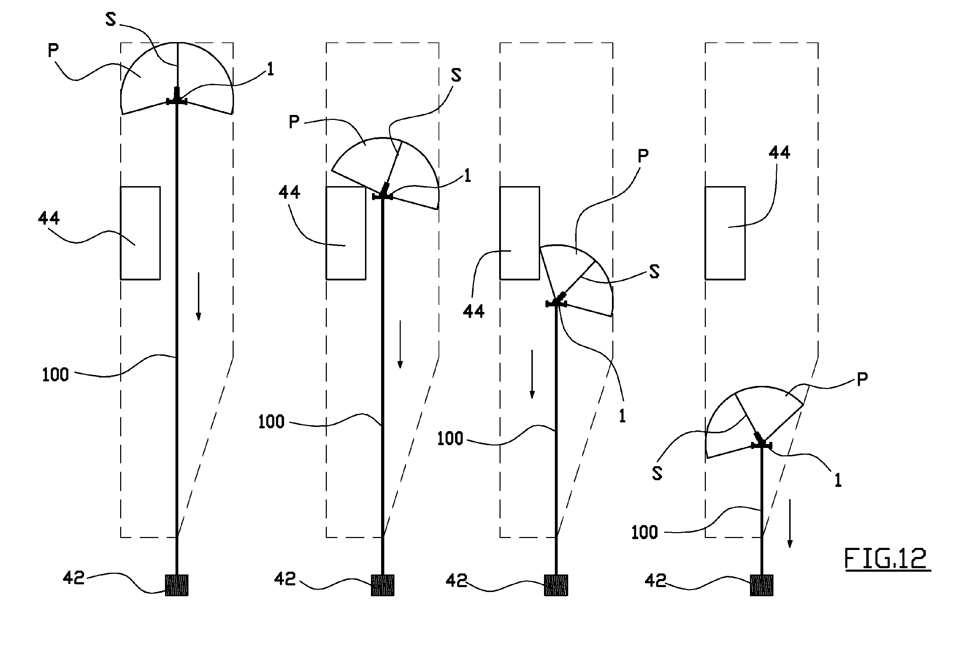

In this way, the dispensing head 2 is constrained to oscillate about the vertical rotation axis A, following a constant angle of oscillation Q (see figure 2) and the jet dispensed therefrom is destined to produce an irrigation sweep P in the shape of a circular segment (see for example figure 12), a radius of which is equal to the length of the jet dispensed and an angular range of which is equal to the angle of oscillation Q of the dispensing head 2.

According to the invention, the shaped plate 70 is associated to first means for moving, denoted in their entirety by 8, which displace the shaped plate 70 in a translation direction X which is perpendicular to the rotation axis A of the dispensing head 2.

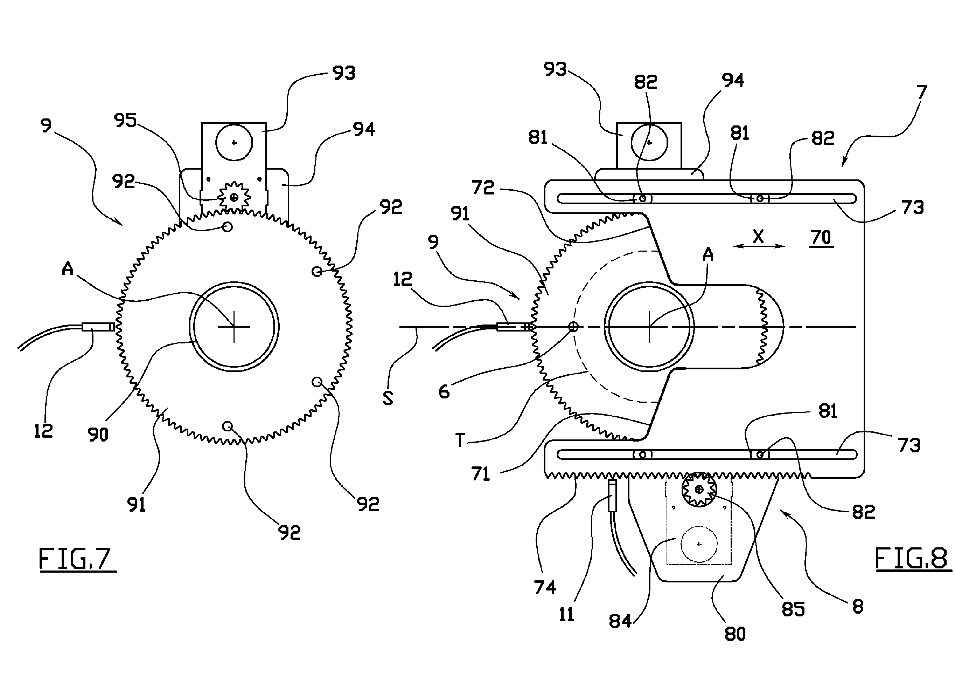

Thanks to the transversal displacement, the stop surfaces 71 and 72 intersect different points of the circular trajectory T, changing the length of the arc of the trajectory in which the command lever 6 is free to displace, and thus obtaining a proportional variation in the range of the angle of oscillation Q of the dispensing head 2, as can be observed by comparing figures 5, 8 and 9.

In particular note that the stop surfaces 71, 72 of the shaped plate 70 have plan profiles which are perfectly specular with respect to a plane of symmetry S, which contains the axis of rotation A of the dispensing head 2, and which is parallel to the translation direction X defined by the first means for moving 8.

In this way, the transversal displacement of the shaped plate 70 enables a change to be made in the range of the angle of oscillation Q of the dispensing head 2, while maintaining the head's (2) orientation with respect to the terrain constant, that is without varying the orientation of the bisecting plane which coincides with the plane of symmetry S.

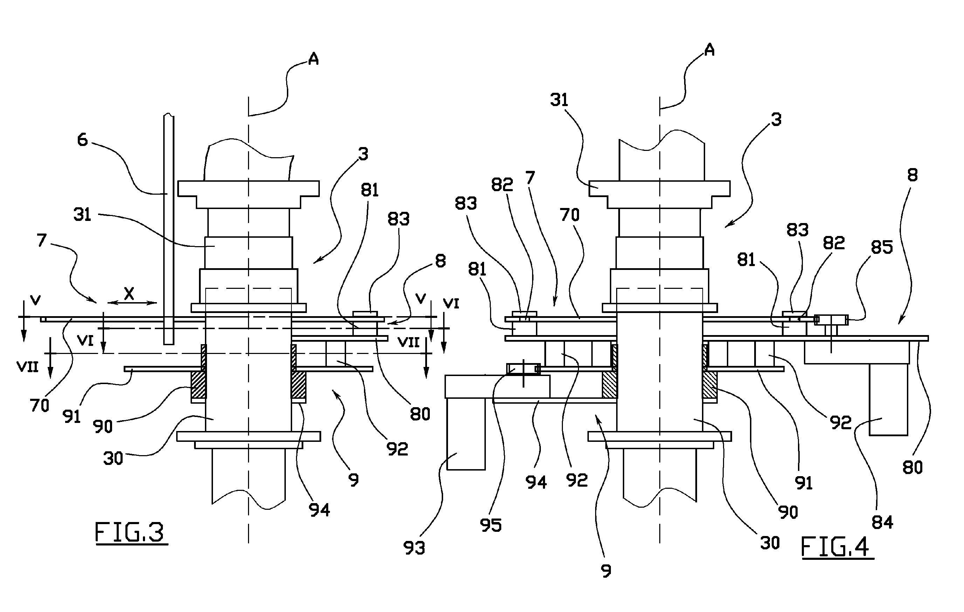

As illustrated in figures from 3 to 6, the first means for moving 8 comprise a support table 80, on which guide means are mounted for constraining the shaped plate 70 to slide in the translation direction X. The guide means comprise two pairs of cylindrical spacers 81 which are destined to restingly support the shaped plate 70. The cylindrical spacers 81 of each pair are reciprocally aligned in the translation direction X (see figure 5) and are provided with respective small-diameter threaded pins 82 which project upwards and are slidably engaged in a straight slot 73 afforded in the shaped plate 70, where they are axially blocked by means of an upper lock nut 83 (figure 4). The sliding of the shaped plate 70 is obtained by an electric motor 84, which is fixed by the support table 80 and is destined to rotate a cogged pinion 85, which is enmeshed with a straight rack 74 afforded directly along an edge of the shaped plate (see figure 5).

The irrigator 1 further comprises second means for moving, denoted in their entirety by 9, which rotate the shaped plate 70 and the first means for moving 8 together about the vertical axis A of the dispensing head 2, so that to each rotation of the plate 70 there corresponds an equal rotation also in the translation direction X defined by the first means for moving 8.

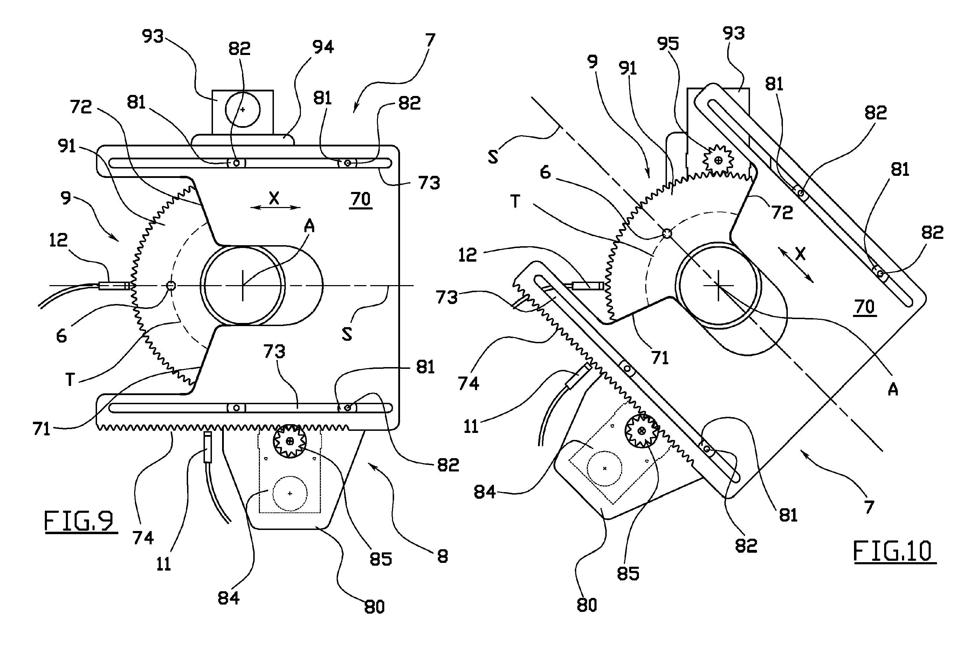

Thanks to this rotation, the points of intersection between the stop surfaces 71 and 72 and the trajectory T of the lever 6 rotate about the vertical axis A, keeping the length of the arc comprised between them constant, as can be observed by comparing figures 9 and 10.

In this way, the orientation of the angle of oscillation Q of the dispensing head 2 with respect to the ground is modified, i.e. the direction of the bisecting plane thereof, while the range thereof is left unchanged.

As illustrated in figures 3, 4 and 7, the second means for moving 9 comprise a hub 90 keyed to the lower support tube 30, and a cogged wheel 91 rotatably coupled to the hub 90, which is destined to rotate about a vertical axis coinciding with the rotation axis A of the dispensing head 2. The support table 80 is restingly fixed on the cogged wheel 91, with the interposing of four spacer blocks 92. The rotation of the cogged wheel 91 is obtained by an electric motor 93, which is installed on a plate 94 fixed to the hub 90, and is destined to rotate a cogged pinion 95 which enmeshes with the cogged wheel 91.

The functioning of the first means for moving 8 and the second means for moving 9 is managed by an electronic command unit 10, schematically illustrated in figure 2, which is destined to command the electric motors 84 and 93.

Two positional sensors are associated to the command unit 10, of which a first sensor 11 destined to detect the position of the shaped plate 70 along the translation direction X and a second sensor 12 destined to detect the orientation of the shaped plate 70 with respect to the rotation axis A.

On the basis of the data provided by the first and second sensors 11 and 12, the command unit 10 is able respectively to calculate the width and orientation reached by the angle of oscillation Q of the dispensing head 2, such as to perform a retroactive control of the electric motors 84 and 93, which enables a very precise and reliable regulation of the irrigation sweep P generated by the dispensing head 2.

In the illustrated example, the sensors 11 and 12 are proximity sensors which count the passage of the cogs, respectively of the straight rack 74 and the cogged wheel 91, with respect to a zero position, such as to measure the entity respectively of the translation and the rotation of the shaped plate 70.

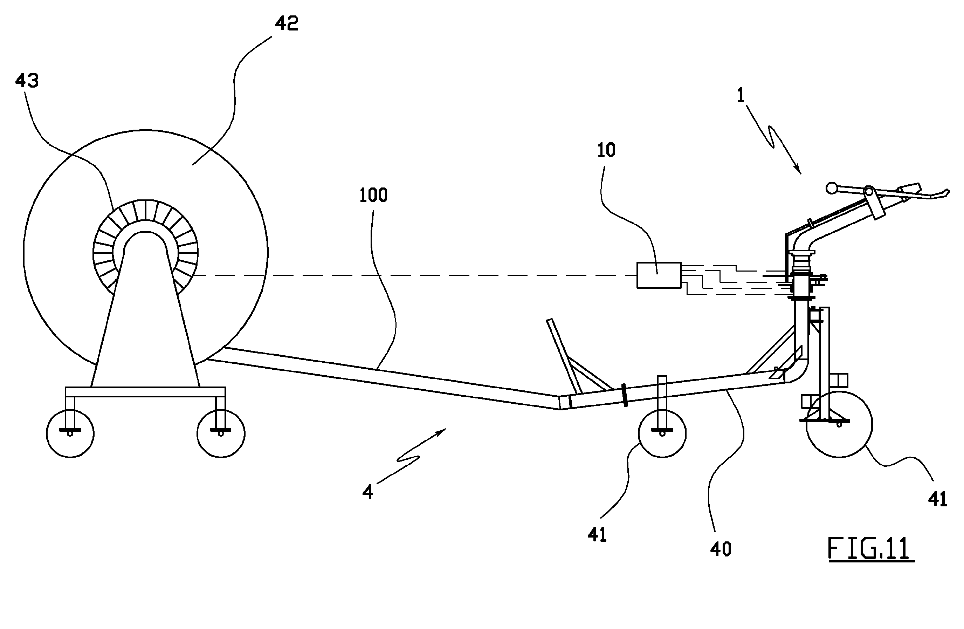

Figure 11 illustrates a system of irrigation 4 in which the above-described irrigator 1 is installed on board a self-propelling carriage 40, which is provided with idle wheels 41 for moving over the ground.

A flexible supply conduit 100 is associated to the self-propelling carriage 40, a terminal end of which is blocked on the carriage 40 and is in communication with the lower support tube 30 of the irrigator 1.

The flexible supply conduit 100 is wound on a rotatable reel 42 which is associated to a drawing motor 43 which sets the reel 42 in rotation about an axis thereof, in order to wind up the supply conduit 100.

As illustrated in figure 12, the use of the irrigation system 4 includes the supply conduit 100 being unwound from the rotatable reel 42, up until the self-propelling carriage 40 is brought to a predetermined distance from the reel 42.

At this point the irrigator 1 is set in function, such as to dispense the jet of liquid and create the irrigation sweep P, and at the same time the drawing motor 43 of the rotatable reel 42 is activated.

In this way, the winding of the supply conduit 100 on the rotatable reel 42 draws the self-propelling carriage 40 to move on the ground in a straight direction, consequently displacing the irrigation sweep P produced by the irrigator, in order to wet a larger strip of terrain.

In a preferred aspect of the invention, the electronic command unit 10 of the irrigator 1 is connected to a sensor (not illustrated) for detecting the position of the self-propelling carriage 40 on the ground, and is programmable such as automatically to command the first means for moving 8 and the second means for moving 9 the irrigator 1, according to the position of the carriage 40 detected by the position sensor.

The position sensor can be for example a sensor counting the revolutions of the rotating reel 42, so that on the basis of the initial distance of the carriage 40 with respect to the rotating reel 42 and on the basis of the diameter of the reel 42, the command unit 10 can at any moment measure the relative nearing of the self-propelling carriage 40 and thus the position thereof along the straight run.

In this way, during the displacement of the carriage 40 the command unit 10 is effectively able automatically to regulate the width and/or inclination of the angle of oscillation Q of the dispensing head 2, and thus of the irrigation sweep P, such as to wet surfaces of terrain having a complex perimeter (denoted by the broken line in figure 12), for example in order to follow the borders of a field or to move around obstacles 44.

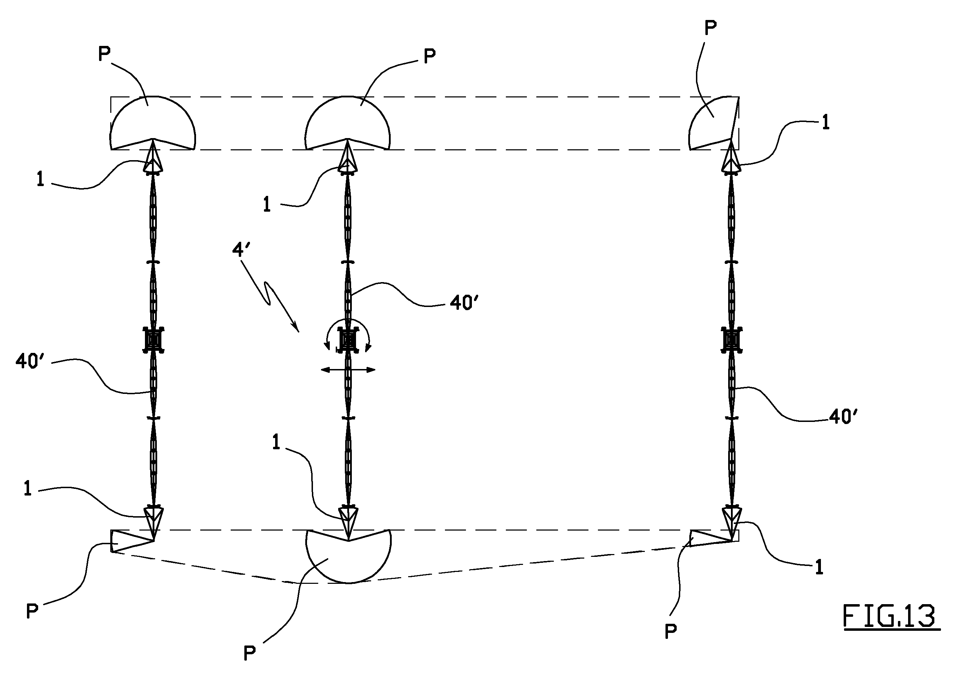

Figure 13 illustrates a different irrigation system 4' in which two irrigators 1 (schematically illustrated) are installed at ends of a large self-propelling structure 40', generally bridge-shaped and of known type, to which relative supply conduits of the liquid to be dispensed are associated.

The self-propelling structure 40' is provided with motorised wheels which enable it to displace on the terrain, generally very slowly, performing straight and/or rotary movements about a vertical axis.

In this case too, the invention comprises the command unit 10 of each irrigator 1 being associated to sensors (not illustrated) destined to detect the relative position of the self-propelling structure 40' on the terrain, and being programmable such as to automatically command the first and the second means for moving the shaped plate 70 according to the position of the structure 40' detected by the sensors, such as to wet surfaces of terrain having a complex perimeter such as the ones denoted by a broken line in figure 13.

Obviously a technical expert in the sector might make numerous modifications of a technical-applicational nature to the irrigator 1 and the systems of irrigation 4, 4' described herein above, without forsaking the ambit of the invention as claimed herein below.

## Claims

1. An irrigator, comprising:
a dispensing head (2) to which activating means (5) are associated which activating means (5) cause the dispensing head (2) to rotate about a substantially vertical rotation axis (A) thereof, a command organ (6) of the activating means (5), which command organ (6) is mounted on board the dispensing head (2) such as to rotate solidly with the head (2) about the rotation axis (A), and which is mobile on the dispensing head (2) between at least a first operating position, in which it commands the activating means (5) to rotate the dispensing head (2) in a direction, and a second operating position, in which it commands the activating means (5) to rotate the dispensing head (2) in an opposite direction thereto, and endrun stop means (7), fixed with respect to the dispensing head (2), which endrun stop means (7) provide at least two stop surfaces (71, 72) which contactingly receive the command organ (6) at two distinct points of a circular trajectory (T) described thereby following rotation of the dispensing head (2), such as to displace the command organ (6) respectively from the first operating position into the second operating position and vice versa, in order to invert the rotation direction of the dispensing head (2),
**characterised in that** it comprises first means for moving (8) which displace the endrun stop means (7) in a translation direction (X) which is perpendicular to the rotation axis (A) of the dispensing head (2), such as to change the points of the circular trajectory (T) of the command organ (6) which are intercepted by the at least two stop surfaces (71, 72).

2. The irrigator of claim 1, **characterised in that** the at least two stop surfaces (71, 72) of the endrun stop means (7) are reciprocally specular with respect to a plane of symmetry (S) containing the rotation axis (A) of the dispensing head (2), and parallel to the translation direction (X) of the endrun stop means (7).

3. The irrigator of claim1, **characterised in that** the endrun stop surfaces (71, 72) are provided by a single solid body (70).

4. The irrigator of claim 3, **characterised in that** the single solid body (70) is a shaped plane (70) lying in a perpendicular plane to the rotation axis (A) of the dispensing head (2).

5. The irrigator of claim 1, **characterised in that** the first means for moving (8) comprise a support body (80) to which guide means (81, 82) are associated for guiding the endrun stop means (7) to slide in the translation direction (X) and further comprise motor means (84, 85) for sliding the endrun stop means (7) with respect to the support body (80).

6. The irrigator of claim 5, **characterised in that** the motor means comprise an electric motor (84) destined to activate a cogged pinion (85), which is enmeshed with a straight rack (74) which is solidly constrained to the endrun stop means (7).

7. The irrigator of claim 1, **characterised in that** it comprises second means for moving (9) which are destined to cause the endrun stop means (7) and the first means for moving (8) to rotate together about the rotation axis (A) of the dispensing head (2), such that each rotation of the endrun stop means (7) corresponds to an equal rotation of the translation direction (X) defined by the first means for moving (8).

8. The irrigator of claim 7, **characterised in that** the second means for moving (9) comprise a cogged wheel (91) having a rotation axis which coincides with the rotation axis (A) of the dispensing head (2), to which cogged wheel (91) the endrun stop means (7) and the first means for moving (8) are fixed, and motor means (93, 95) which rotate the cogged wheel (91) about a rotation axis thereof.

9. The irrigator of claim 8, **characterised in that** the motor means comprise an electric motor (93) destined to activate a cogged pinion (95), which cogged pinion (95) is enmeshed with the cogged wheel (91).

10. The irrigator of claim 7, **characterised in that** it comprises an electronic command unit (10) for automatically commanding the first means for moving (8) and the second means for moving (9).

11. The irrigator of claim 10, **characterised in that** the command unit (10) is associated to sensors (11, 12) for detecting respectively the position of the endrun stop means (7) along the translation direction (X) and the angular position of the endrun stop means (7) about the rotation axis (A).

12. An irrigation system **characterised in that** it comprises a self-propelling structure (40, 40') and sensor means for detecting a position of the self-propelling structure (40, 40') on a terrain, which sensor means are connected to an electronic command unit (10) of the irrigator (1).

13. The irrigation system of claim 12, **characterised in that** the command unit (10) is programmable such as to command the first means for moving (8) and the second means for moving (9) of the endrun stop means (7), according to the position of the self-propelling structure (40, 40') on the terrain detected by the sensor means.
